# FASCICULE DE BREVET EUROPEEN

(11) **EP 3 881 237 B1**
(45) Date de publication et mention de la délivrance du brevet: **30.11.2022**
(21) Numéro de dépôt: 19813094.0
(22) Date de dépôt: 23.10.2019
(51) Int. Cl.: G06K 19/077, H04B 5/00

(54) **DISPOSITIF ET PROCÉDÉ DE DÉTECTION D'UNE OUVERTURE OU D'UNE TENTATIVE D'OUVERTURE D'UN RÉCIPIENT FERMÉ**
VORRICHTUNG UND VERFAHREN ZUR DETEKTION EINER ÖFFNUNG ODER EINES ÖFFNUNGSVERSUCHES VON EINEM GESCHLOSSENEN BEHÄLTER
APPARATUS AND METHOD FOR DETECTING A TENTATIVE OF OR AN OPENING OF A CLOSED CONTAINER

(30) Priorité: 12.11.2018 FR 1860418
(43) Date de publication de la demande: 22.09.2021
(73) Titulaire: STMicroelectronics (Rousset) SAS, 13790 Rousset (FR)
(72) Inventeur: MANGIONE, Jose, 06250 Mougins (FR); TUDOSE, Andrei, 06740 Chateauneuf (FR); BAUDRION, Pierre Yves, 06140 Tourrettes Sur Loup (FR); PANTEL, Joran, 13010 Marseille (FR)
(74) Mandataire: Casalonga
(86) Numéro de dépôt international: PCT/FR2019/052521
(87) Numéro de publication internationale: WO 2020/099747

(56) Documents cités:
- FR-A1- 3 038 102

## Description

Des modes de mise en œuvre et de réalisation de l'invention concernent les transpondeurs passifs sans contact, notamment des transpondeurs NFC (« Near Field Communication »), par exemple des étiquettes (tags) et en particulier l'utilisation de tels transpondeurs pour la détection d'une ouverture ou d'une tentative d'ouverture par un tiers mal intentionné, d'un récipient fermé contenant par exemple un produit de valeur, par exemple un flacon de parfum

La communication champ proche, plus connue par l'homme du métier sous la dénomination anglosaxonne NFC (« Near Field Communication ») est une technologie de connectivité sans fil qui permet une communication sur une courte distance, par exemple 10 cm, entre des dispositifs électroniques, comme par exemple des cartes à puce sans contact ou des étiquettes, et des lecteurs.

Plus généralement la technologie NFC est une technologie normalisée par le consortium NFC Forum.

La technologie NFC est particulièrement adaptée pour connecter tout type de dispositif utilisateur et permet des communications rapides et faciles.

Un transpondeur sans contact est un transpondeur capable d'échanger des informations via une antenne avec un lecteur sans contact, selon un protocole de communication sans contact.

Un transpondeur NFC, qui est un transpondeur sans contact, est un transpondeur compatible avec la technologie NFC.

La technologie NFC est une plate-forme technologique ouverte normalisée dans la norme ISO/IEC 18092 et ISO/IEC 21481 mais incorpore de nombreuses normes déjà existantes comme par exemple les protocoles type A et type B définis dans la norme ISO-14443 qui peuvent être des protocoles de communication utilisables dans la technologie NFC.

La technologie sans contact peut aussi être utilisée dans les transpondeurs RFID (Radio Frequency IDentification) compatibles avec les normes ISO 15693 et ISO 18000-3.

Lors d'une transmission d'information entre un lecteur et un transpondeur passif, le lecteur génère un champ magnétique par l'intermédiaire de son antenne qui est généralement dans les normes classiquement utilisées, une onde sinusoïdale (la porteuse) à 13,56MHz.

Pour transmettre des informations depuis le lecteur vers le transpondeur, le lecteur utilise une modulation d'amplitude de ladite porteuse.

Le transpondeur quant à lui démodule la porteuse reçue pour en déduire les données transmises depuis le lecteur.

Pour une transmission d'informations du transpondeur vers le lecteur, le lecteur génère le champ magnétique (la porteuse) sans modulation. L'antenne du transpondeur module alors le champ généré par le lecteur, en fonction des informations à transmettre. La fréquence de cette modulation correspond à une sous-porteuse de ladite porteuse. La fréquence de cette sous porteuse dépend du protocole de communication utilisé et peut être par exemple égale à 848 kHz.

Cette modulation est effectuée en modifiant la charge connectée aux bornes de l'antenne du transpondeur.

En d'autres termes, le transpondeur rétro-module l'onde issue du lecteur pour transmettre des informations et n'intègre pas, pour la transmission des informations, de moyens d'émission proprement dits, ou émetteur, capable par exemple de générer son propre champ magnétique lors de l'émission. Un tel transpondeur dépourvu d'émetteur est appelé transpondeur passif, par opposition à un transpondeur actif qui comporte un émetteur.

Généralement un transpondeur passif est dépourvu d'alimentation car il utilise l'onde issue du lecteur pour alimenter son circuit intégré.

Comme indiqué ci-avant, la transmission d'informations depuis le transpondeur passif vers le lecteur s'effectue par une modulation de charge.

En effet, en modifiant la charge aux bornes de l'antenne du transpondeur, l'impédance de sortie de l'antenne du lecteur change en raison du couplage magnétique entre les deux antennes.

Cette variation de charge effectuée lors de la modulation de charge se traduit par une modulation d'amplitude et/ou de phase du signal (tension ou courant) au niveau de l'antenne du lecteur. Une copie du courant d'antenne est générée et injectée dans la chaîne de réception du lecteur où il est démodulé et traité de façon à extraire les informations transmises.

Actuellement, afin de déterminer si un produit est apte à être utilisé ou vendu, il devient de plus en plus obligatoire de déterminer si le récipient contenant le produit n'a pas été ouvert, par exemple dans le but de remplacer le produit original par un produit contrefait ou de moins bonne qualité.

Une inspection visuelle du récipient ne s'avère plus suffisante. Aussi, a-t-il été proposé d'utiliser un transpondeur passif équipé d'un fil électriquement conducteur reliant deux bornes de sortie du circuit intégré équipant ce transpondeur pour détecter une non ouverture ou une ouverture du récipient correspondant respectivement à un non sectionnement ou à un sectionnement dudit fil.

Plus précisément, le circuit intégré va comparer les tensions présentes aux deux bornes de sortie pour en déduire un sectionnement ou un non sectionnement dudit fil.

Cependant, il s'avère que si le fil, une fois sectionné, a été resolidarisé, par exemple au moyen d'une soudure ou d'une colle électriquement conductrice, la comparaison des tensions aux deux bornes de sortie du circuit intégré va de nouveau correspondre à une non-ouverture du récipient alors qu'en réalité celui-ci a pu être effectivement ouvert.

La demande de brevet FR 3 038 102 A1 décrit un système comprenant un récipient fermé et un dispositif de détection, le dispositif de détection comprenant un transpondeur passif sans contact configuré pour communiquer avec un lecteur via une antenne en utilisant un signal de porteuse, le transpondeur comportant un circuit intégré possédant deux bornes d'antenne connectées à l'antenne et deux bornes supplémentaires.

Il existe donc un besoin de pouvoir détecter un sectionnement du fil suivi d'une resolidarisation de celui-ci par exemple par une colle conductrice ou un point de soudure, ce qui pourra alors être par exemple synonyme d'une tentative d'ouverture ou d'une ouverture d'un récipient équipé de ce fil avec resolidarisation de ce fil postérieurement à ladite ouverture.

Selon un aspect, il est proposé un système comprenant un récipient fermé, par exemple un emballage d'une bouteille de parfum sans que cet exemple ne soit limitatif, et un dispositif de détection.

Le dispositif de détection comprend un transpondeur passif sans contact configuré pour communiquer avec un lecteur, par exemple un téléphone mobile cellulaire émulé en mode lecteur, via une antenne en utilisant un signal de porteuse.

Le transpondeur comporte un circuit intégré possédant deux bornes d'antenne connectées à l'antenne et une première et une deuxième bornes supplémentaires reliées par un premier fil électriquement conducteur.

Ce premier fil électriquement conducteur a une partie sectionnable, et est agencé pour être sectionné au niveau de sa partie sectionnable en cas d'ouverture ou de tentative d'ouverture du récipient.

Une tentative d'ouverture est par exemple une action visant à commencer à ouvrir le récipient sans l'ouvrir complètement.

Le dispositif de détection comporte également un moyen de court-circuit configuré pour court-circuiter la première borne supplémentaire du circuit intégré avec une autre borne de ce circuit intégré (cette autre borne, différente de la deuxième borne supplémentaire, pouvant être, par exemple, une première borne d'antenne, cette première borne d'antenne étant elle-même connectée à l'antenne, ou bien une troisième borne supplémentaire du circuit intégré), en cas de sectionnement de la partie sectionnable et reconstitution d'une connexion électrique entre les première et deuxième bornes supplémentaires.

Selon un mode de réalisation, le système possède une première configuration dans laquelle le premier fil électriquement conducteur n'est pas sectionné et électriquement isolé du moyen de court-circuit, et une deuxième configuration dans laquelle le premier fil électriquement conducteur est sectionné au niveau de sa partie sectionnable de façon à former deux parties de fils, les extrémités des deux parties de fils étant électriquement resolidarisées par un moyen de solidarisation électriquement conducteur, par exemple un plot de colle électriquement conductrice ou une soudure, venant également contacter une partie du moyen de court-circuit.

Selon un mode de réalisation, ledit moyen de court-circuit comprend un élément électriquement conducteur disposé au voisinage de la partie sectionnable du premier fil électriquement conducteur et relié à ladite autre borne par un deuxième fil électriquement conducteur, cet élément électriquement conducteur étant électriquement isolé du premier fil électriquement conducteur en absence de sectionnement de ce premier fil électriquement conducteur.

Selon un mode de réalisation, le moyen de solidarisation électriquement conducteur contacte l'élément électriquement conducteur et le premier fil électriquement conducteur dans ladite deuxième configuration.

Cet élément électriquement conducteur peut comprendre un élément surfacique électriquement conducteur, qui peut être rigide ou flexible, telle qu'une couche métallique ou une feuille métallique.

Dans un mode possible de réalisation, en absence de sectionnement du premier fil électriquement conducteur, la partie sectionnable du premier fil électriquement conducteur est par exemple supportée par l'élément surfacique et électriquement isolée de cet élément surfacique par une couche isolante.

L'isolation électrique entre l'élément surfacique et le premier fil électriquement conducteur est alors assurée dans ladite première configuration du système.

En variante, l'élément électriquement conducteur peut comprendre un fil électriquement conducteur s'étendant au voisinage et le long de la partie sectionnable du premier fil électriquement conducteur, ce fil électriquement conducteur et le premier fil électriquement conducteur étant séparés en absence de sectionnement de ce premier fil électriquement conducteur.

L'isolation électrique entre ces deux fils est alors assurée dans ladite première configuration du système.

A titre d'exemple, deux fils sont ici considérés au voisinage l'un de l'autre lorsqu'ils sont espacés de quelques micromètres, par exemple 10 micromètres, à plusieurs millimètres.

La valeur de 200 micromètres peut être un exemple non limitatif pour la valeur de cet espace.

Quelle que soit la variante adoptée pour la réalisation de l'élément électriquement conducteur, le premier fil électriquement conducteur présente avantageusement dans une zone, une forme du type spirale.

La probabilité de sectionnement de premier fil lors d'une ouverture ou d'une tentative d'ouverture du récipient est alors augmentée.

Et en combinaison avec cette forme du type spirale, il est particulièrement avantageux lorsque l'élément électriquement conducteur est un fil électriquement conducteur, que ce dernier présente dans ladite zone, également une forme du type spirale qui est préférentiellement imbriquée dans la forme du type spirale du premier fil électriquement conducteur.

Ceci rend encore plus difficile pour un tiers mal intentionné la possibilité de reconstituer au niveau de la spirale, le premier fil sectionné en évitant le court-circuit avec le fil électriquement conducteur formant l'élément électriquement conducteur.

Comme indiqué ci avant, selon une première variante possible, ladite autre borne peut être une première borne d'antenne.

Dans ce cas le court-circuit en cas de sectionnement et reconstitution du premier fil conducteur se fera entre la première borne supplémentaire et l'antenne via la première borne d'antenne, ce qui va entraîner un comportement défectueux du transpondeur.

Cela étant il peut dans certains cas être particulièrement intéressant de conserver un transpondeur fonctionnel même après reconstitution du premier fil conducteur sectionné.

Aussi est-il prévu dans une telle deuxième variante que le circuit intégré comporte une troisième borne supplémentaire (différente des bornes d'antenne et des première et deuxième bornes supplémentaires), ladite autre borne étant alors cette troisième borne supplémentaire.

Selon un mode de réalisation de cette autre variante, le circuit intégré comprend des moyens de génération configurés pour délivrer un signal de test sur la première borne supplémentaire, et des moyens de détection configurés pour détecter la présence ou l'absence dudit signal de test sur la deuxième borne supplémentaire et sur la troisième borne supplémentaire.

Ce signal de test présente avantageusement un motif spécifique facilement détectable. Ce signal de test peut être par exemple une impulsion rectangulaire.

Selon un mode de réalisation de cette autre variante :
- dans ladite première configuration (premier fil non sectionné et non reconstitué), les moyens de détection sont configurés pour détecter la présence du signal de test sur la deuxième borne supplémentaire et l'absence du signal de test sur la troisième borne supplémentaire, et
- dans ladite deuxième configuration (premier fil sectionné et reconstitué), les moyens de détection sont configurés pour détecter la présence du signal de test sur la deuxième borne supplémentaire et sur la troisième borne supplémentaire.

Selon un mode de réalisation, le système possède en outre une configuration intermédiaire dans laquelle le premier fil électriquement conducteur est sectionné au niveau de sa partie sectionnable de façon à former les deux parties de fil non électriquement en contact et électriquement isolées du moyen de court-circuit, et les moyens de détection sont alors configurés pour, dans cette configuration intermédiaire, détecter une absence du signal de test sur la deuxième borne supplémentaire et sur la troisième borne supplémentaire.

Selon un autre aspect, il est proposé un procédé de détection d'un sectionnement de la partie sectionnable du premier fil électriquement conducteur suivi d'une reconstitution d'une connexion électrique entre les première et deuxièmes bornes supplémentaires du dispositif appartenant au système tel que défini ci-avant dans la première variante, le procédé comprenant, en présence du transpondeur dans un état non défectueux, une non-réponse du transpondeur en présence d'un champ magnétique émis par le lecteur.

Selon un autre aspect il est proposé un procédé de détection d'un sectionnement de la partie sectionnable du premier fil électriquement conducteur suivi d'une reconstitution d'une connexion électrique entre la première et la deuxième bornes supplémentaires du dispositif appartenant au système tel que défini ci-avant dans la deuxième variante, comprenant une génération d'un signal de test sur la première borne supplémentaire et une détection du signal de test sur la deuxième et la troisième bornes supplémentaires.

D'autres avantages et caractéristiques de l'invention apparaîtront à l'examen de la description détaillée de modes de mises en œuvre et de réalisation, nullement limitatifs, et des dessins annexés sur lesquels :
la figure 1 illustre schématiquement un exemple d'architecture d'un transpondeur passif selon l'invention,
la figure 2 illustre schématiquement un mode de réalisation d'un système selon l'invention,
la figure 3 illustre schématiquement un exemple de placement d'un dispositif de détection selon l'invention sur un récipient fermé,
la figure 4 illustre schématiquement le dispositif de détection de la figure 3 caché par un cache,
la figure 5 illustre une première configuration du système de la figure 2,
la figure 6 illustre schématiquement une configuration intermédiaire du système de la figure 2,
la figure 7 illustre schématiquement une deuxième configuration du système de la figure 2,
la figure 8 illustre un exemple de mise en œuvre d'un procédé selon l'invention,
la figure 9 illustre un autre mode possible de réalisation de l'invention,
la figure 10 illustre encore un autre mode possible de réalisation de l'invention, et
les figures 11 à 20 illustrent schématiquement d'autres modes de réalisation et de mise en œuvre de l'invention.

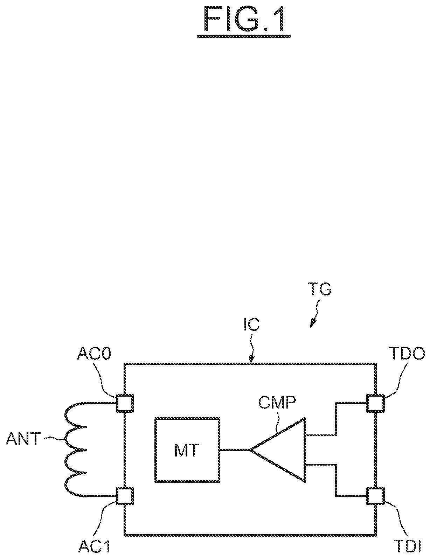

Sur la figure 1, la référence TG désigne un transpondeur passif sans contact, par exemple une étiquette. Dans cet exemple, le transpondeur passif sans contact est configuré pour communiquer avec un lecteur (non représenté ici) via son antenne ANT en utilisant un signal de porteuse ayant une fréquence par exemple de 13,56MHz.

Le transpondeur passif est ici un transpondeur capable de communiquer selon un protocole de communication sans contact utilisant par exemple la technologie de communication sans proche (NFC).

Ce transpondeur peut être également un transpondeur RFID utilisant cette technologie NFC.

Ce transpondeur TG comprend un circuit intégré IC, par exemple un circuit intégré de la famille ST25 commercialisé par la société STMicroelectronics.

Le circuit intégré IC comporte deux bornes dites bornes d'antenne (ou bornes d'entrée) AC0 et AC1 respectivement connectées aux deux bornes de l'antenne ANT.

Le circuit intégré IC comporte également des moyens de traitement MT, comportant par exemple, un circuit de récupération d'énergie, un microprocesseur et/ou une logique câblée ainsi qu'une mémoire, et configurés pour
délivrer une tension d'alimentation à l'ensemble du circuit intégré à partir du champ magnétique reçu d'un lecteur, et
traiter les informations reçues du lecteur et rétro-moduler le signal de porteuse en vue de la transmission d'informations vers le lecteur.

Le circuit intégré IC comporte également deux bornes supplémentaires ou bornes de sortie, TDO et TDI, ainsi que des moyens de comparaison CMP configurés pour comparer la tension présente à la borne de sortie TDO avec la tension présente à la borne de sortie TDI et délivrer le résultat de cette comparaison aux moyens de traitement MT.

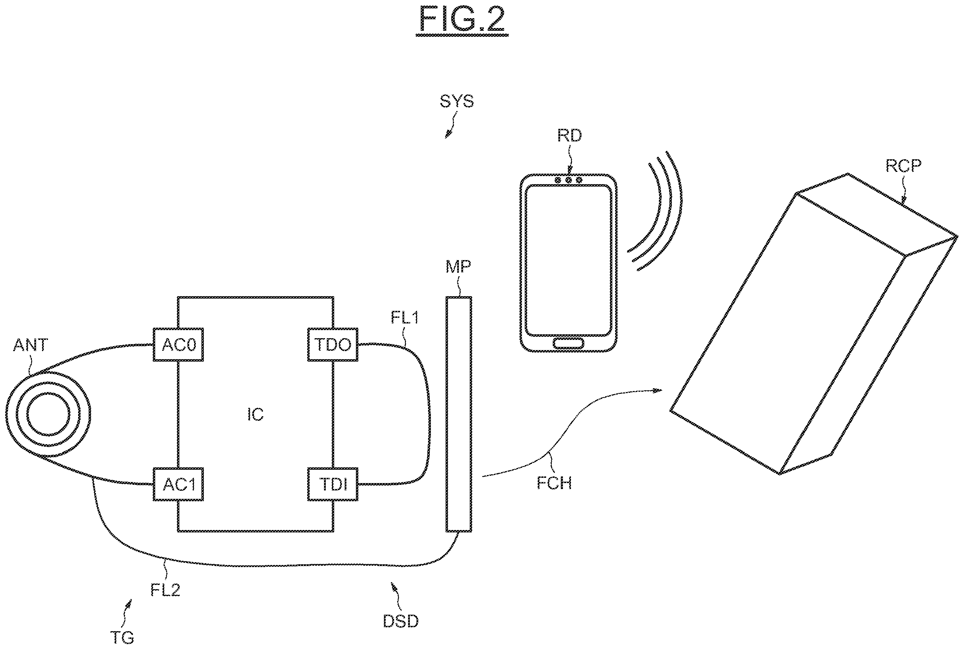

Sur la figure 2, la référence SYS désigne un système comportant un dispositif DSD de détection, destiné à détecter par exemple une tentative d'ouverture ou d'une ouverture d'un récipient fermé RCP destiné par exemple à contenir un produit, par exemple un flacon de parfum.

Le dispositif de détection DSD comporte le transpondeur passif sans contact TG ainsi qu'un premier fil électriquement conducteur FL1 reliant les deux bornes de sortie TDO et TDI du circuit intégré IC.

Les moyens de traitement sont configurés pour délivrer une tension de référence sur l'une des bornes de sortie, par exemple la borne TDO. Si le premier fil FL1 est pas sectionné, la tension présente sur l'autre borne de sortie, par exemple la borne TDI, dépend de la tension de référence, de la résistance du premier fil et d'une résistance de tirage vers le bas (« Pull down ») connectée entre la borne TDI et la masse.

Avec une résistance du premier fil inférieure à 3,5 kiloohms et une résistance de tirage vers le bas de l'ordre de 20 kiloohms, on choisit une tension de référence de sorte que la tension sur la borne TDI soit dans une plage de valeurs conduisant par exemple à la délivrance d'une première valeur logique, par exemple un «1» logique, en sortie du comparateur CMP.

La première valeur logique est alors synonyme d'une intégrité du premier fil FL1.

Si par contre le premier fil FL1 est sectionné, la tension sur la borne TDI sera proche de ou égale à 0 (la masse) conduisant à la délivrance d'une deuxième valeur logique, par exemple un «0» logique, en sortie du comparateur CMP.

Le dispositif de détection comporte également un élément électriquement conducteur MP qui, lorsque le récipient RCP n'est pas ouvert ou n'a pas été ouvert puis refermé, est électriquement isolé du premier fil électriquement conducteur FL1.

Le dispositif de détection DSD comporte également un deuxième fil électriquement conducteur FL2 reliant une première borne d'entrée, ici la borne AC1, du circuit intégré IC à l'élément électriquement conducteur MP.

Comme l'illustre la flèche FCH, le dispositif de détection est destiné à être placé sur le récipient fermé RCP d'une façon appropriée comme cela va être décrit plus en détail ci-après.

En outre, un lecteur sans contact RD, par exemple un téléphone mobile cellulaire émulé en mode lecteur, est capable de communiquer avec le transpondeur TG.

D'une façon générale, le premier fil électriquement conducteur FL1 a une partie sectionnable, qui peut être tout ou partie du premier fil, et le premier fil électriquement conducteur est agencé sur le récipient pour être sectionné au niveau de sa partie sectionnable en cas d'ouverture ou de tentative d'ouverture du récipient.

Par ailleurs, un moyen de court-circuit comportant ici l'élément électriquement conducteur MP et le deuxième fil électriquement conducteur FL2 est configuré pour court-circuiter une première borne de sortie, par exemple la borne TDI avec une première borne d'entrée, par exemple la borne AC1, en cas de sectionnement de la partie sectionnable du premier fil électriquement conducteur et reconstitution d'une connexion électrique entre les deux bornes de sortie TDO et TDI.

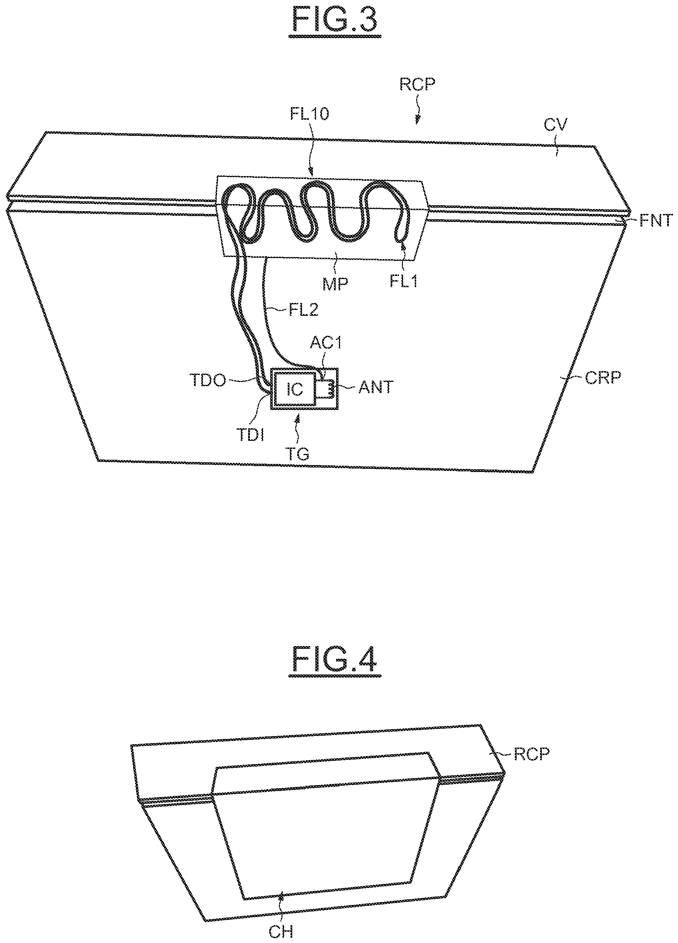

On se réfère maintenant plus particulièrement à la figure 3 pour illustrer un exemple de mise en place du dispositif de détection sur un récipient RCP.

Dans cet exemple, le récipient RCP est une boîte comportant un corps CRP fermé par un couvercle CV ménageant avec le corps CRP une fente FNT.

Dans cet exemple très schématique, l'élément électriquement conducteur est une feuille métallique MP fixée d'une part sur le corps CRP et d'autre part sur le couvercle CV pour recouvrir une partie de la fente FNT.

Le premier fil électriquement conducteur FL1, entouré de sa gaine isolante, serpente sur la feuille métallique MP de façon à s'étendre alternativement sur le couvercle et sur le corps CRP.

Cette partie en forme de serpentin FL10 forme la partie sectionnable du premier fil électriquement conducteur.

En effet, lors de l'ouverture du couvercle CV, le fil FL1 sera sectionné au niveau de la partie sectionnable FL10.

Bien entendu, le dessin de la figure 3 n'est pas à l'échelle et l'homme du métier saura choisir le diamètre adéquat pour le fil FL1 de façon à garantir un sectionnement de celui-ci lors de l'ouverture du couvercle CV.

Le transpondeur TG est par exemple fixé sur une paroi du corps CRP.

Le premier fil FL1 est relié aux bornes de sortie TDO et TDI tandis que le deuxième fil électriquement conducteur FL2 relie la feuille métallique MP à la borne d'entrée AC1 elle-même reliée à l'antenne ANT.

Puis, une fois ce montage effectué, l'ensemble est recouvert d'un cache CH comme illustré très schématiquement sur la figure 4.

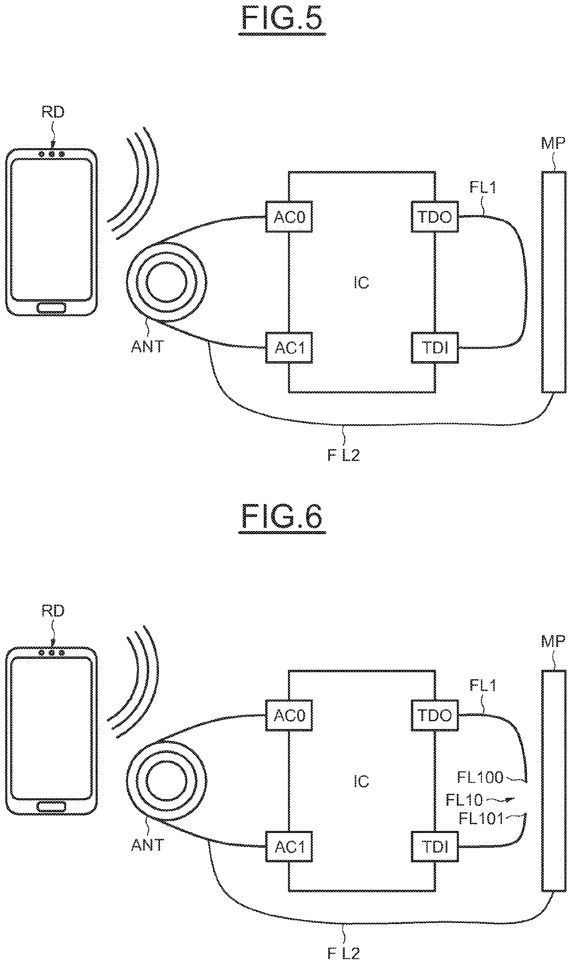

On se réfère maintenant plus particulièrement aux figures 5 à 7 pour illustrer différentes configurations du système SYS.

Dans une première configuration illustrée sur la figure 5, le premier fil électriquement conducteur FL1 n'est pas sectionné et est électriquement isolé de l'élément métallique MP.

Les moyens de traitement du circuit IC reçoivent alors l'information correspondant au «1» logique délivré en sortie du comparateur CMP.

Cette information est transmise au lecteur RD lors d'une communication avec celui-ci.

Cette configuration est représentative d'un premier fil FL1 non sectionné correspondant ici à un récipient non ouvert et donc que le produit, par exemple le flacon de parfum, est un produit valide.

Sur la figure 6, le système SYS présente une configuration intermédiaire dans laquelle la partie sectionnable FL10 du premier fil conducteur FL1 a été sectionnée lors d'une tentative d'ouverture ou d'une ouverture du récipient RCP.

Les deux parties sectionnées FL100 et FL101 du premier fil électriquement conducteur FL1 ne sont pas en contact électrique. De ce fait le comparateur CMP va délivrer un «0» logique et l'information correspondante va être transmise au lecteur RD lors d'une communication entre le lecteur RD et le transpondeur TG signifiant que le premier fil FL1 a été sectionné correspondant par exemple au fait que le récipient RCP a fait l'objet d'une ouverture ou d'une tentative d'ouverture, et donc le produit ne peut pas être considéré comme valide.

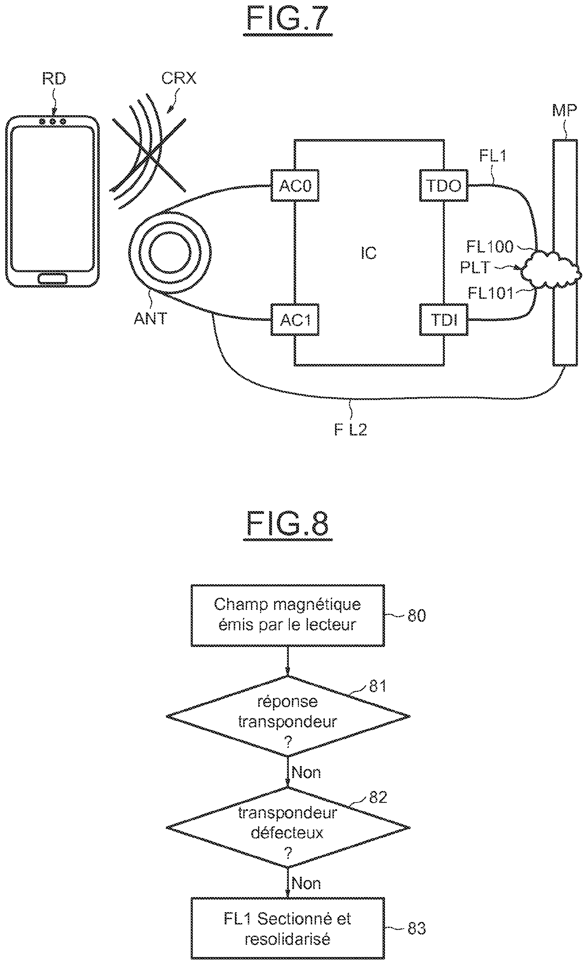

La figure 7 illustre une deuxième configuration du système SYS dans laquelle le premier fil électriquement conducteur FL1, après avoir été sectionné lors d'une tentative d'ouverture ou d'une ouverture du récipient RCP, a été resolidarisé de façon à rétablir la connexion électrique entre les deux bornes de sortie TDO et TDI.

Plus particulièrement, les deux parties sectionnées FL100 et FL101 de ce fil ont été remises en contact électrique par un moyen de solidarisation qui est ici par exemple un plot de colle conductrice PLT.

De par cette opération, une partie du plot de colle PLT est venue en contact avec l'élément électriquement conducteur MP ce qui provoque par conséquent un court-circuit via le deuxième fil électriquement conducteur FL2 et l'élément électriquement conducteur MP, entre la borne de sortie TDI (et d'ailleurs la borne de sortie TDO) et la borne d'entrée AC1 qui est elle-même reliée à l'antenne ANT.

Cette deuxième configuration est par conséquent représentative d'un fil FL1 qui a été sectionné lors d'une tentative d'ouverture ou d'une ouverture du récipient RCP et qui a été resolidarisé pour tenter de faire croire que le fil n'avait pas été sectionné.

Et, lorsque le lecteur RD va essayer d'interroger le transpondeur TG (que l'on suppose être dans un état non défectueux, par exemple non cassé), il va alimenter le circuit intégré IC avec le champ magnétique qu'il génère. Mais, comme il y a un court-circuit entre l'une des bornes de sortie du circuit intégré et l'une des bornes d'entrée de ce même circuit intégré, et par conséquent également avec l'antenne ANT, une grande partie du courant circule dans le deuxième fil électriquement conducteur FL2 au lieu de circuler dans le circuit intégré IC.

De ce fait, le circuit de récupération d'énergie ne peut pas délivrer une tension d'alimentation stable à l'ensemble du circuit intégré et celui-ci ne peut pas s'initialiser et par conséquent le transpondeur devient incapable de répondre au lecteur RD ce qui est schématisé par la croix CRX de la figure 7.

Ainsi, comme illustré sur la figure 8, en présence d'un champ magnétique émis par le lecteur (étape 80) et en l'absence de réponse du transpondeur (étape 81), que l'on suppose non défectueux (étape 82), une resolidarisation électrique du premier fil électriquement conducteur FL1 après sectionnement de celui-ci est détectée, ce qui peut être synonyme d'une ouverture ou une tentative d'ouverture du récipient.

Par contre si le transpondeur TG est défectueux, alors on peut simplement dire que l'on n'est pas capable de vérifier l'intégrité du produit contenu dans le récipient, avec le dispositif de détection.

L'invention n'est pas limitée aux modes de réalisation et de mise en œuvre qui viennent d'être décrits.

Ainsi, d'autres formes d'éléments électriquement conducteurs sont possibles. D'autres agencements du premier fil électriquement conducteur et de l'élément électriquement conducteur peuvent être prévus en fonction de l'application envisagée et/ou de la forme du récipient.

De même, en fonction de l'application envisagée et/ou de la forme du récipient, la partie sectionnable du premier fil électriquement conducteur pourrait se situer au voisinage immédiat de l'élément électriquement conducteur sans nécessairement le chevaucher.

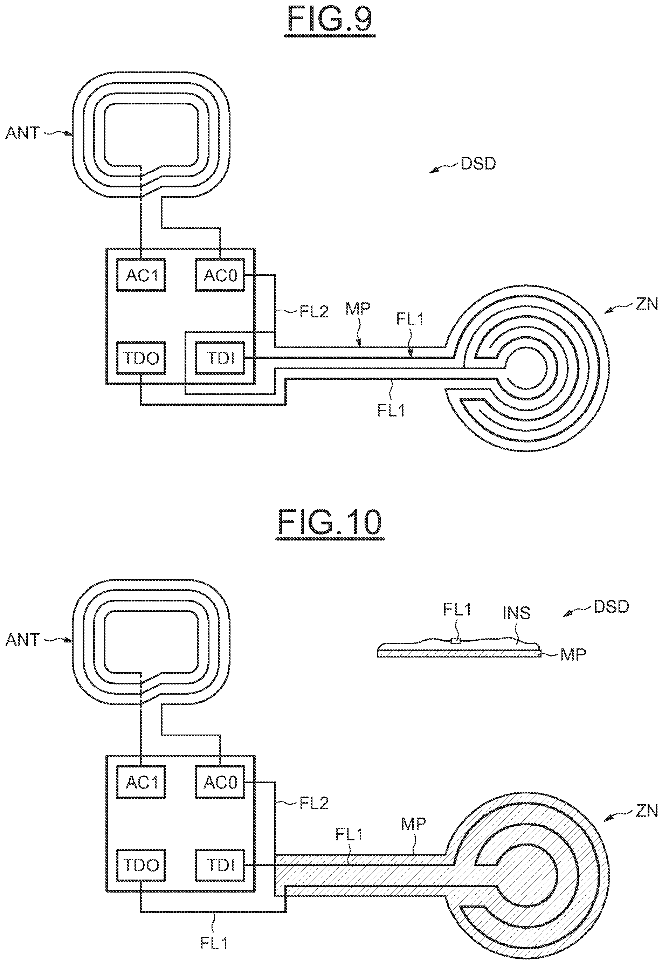

On peut à cet égard se référer plus particulièrement aux figures 9 et 10 qui illustrent schématiquement deux autres modes possibles, mais non limitatifs, de réalisation du dispositif DSD de détection.

Sur la figure 9, le premier fil électriquement conducteur FL1 qui relie les deux bornes de sortie TDO et TDI, comporte des portions rectilignes prolongées dans une zone ZN par des cercles quasi complets et concentriques.

La partie sectionnable de ce fil FL1 peut être considérée comme étant tout ou partie du fil FL1.

L'élément électriquement conducteur MP comporte dans cet exemple un fil situé au voisinage du premier fil FL1.

Ce fil MP comporte également des portions rectilignes imbriquées avec les portions rectilignes du premier fil FL1, prolongées dans la zone ZN par des cercles quasi-complets et concentriques, imbriqués avec les quasi-cercles concentriques du premier fil FL1.

Le deuxième fil FL2 relie le fil MP à la borne d'entrée AC0.

L'isolation électrique entre le premier fil FL1 et le fil MP, lorsque le récipient RCP n'est pas ouvert ou n'a pas été ouvert puis refermé, est obtenu ici par l'espace entre ces fils.

A titre indicatif, cet espace peut être compris entre 10 micromètres et plusieurs millimètres, par exemple 200 micromètres.

Le diamètre des fils peut être également compris entre 10 micromètres et plusieurs millimètres, par exemple 200 micromètres.

Sur la figure 10, le premier fil électriquement conducteur FL1 qui relie les deux bornes de sortie TDO et TDI, présente la même forme que celle illustrée sur la figure 9.

Par contre, l'élément électriquement conducteur MP comporte ici un élément surfacique électriquement conducteur, souple ou rigide, par exemple une couche ou une feuille métallique, supportant le premier fil électriquement conducteur FL1 par l'intermédiaire d'une couche isolante INS, ayant par exemple une épaisseur de 200 micromètres, qui assure l'isolation électrique entre la couche conductrice MP et le fil FL1 lorsque le récipient RCP n'est pas ouvert ou n'a pas été ouvert puis refermé.

Le deuxième fil électriquement conducteur FL2 relie la couche conductrice MP à la borne d'entrée AC0.

Bien entendu, alors que sur les figures 9 et 10, la zone ZN présente une forme circulaire, toute autre forme régulière, par exemple une forme rectangulaire, ou non régulière serait possible.

Plus généralement, le premier fil électriquement conducteur FL1 peut présenter dans la zone ZN, une forme de type spirale.

Et dans le cas où l'élément électriquement conducteur MP comporte également un fil comme c'est le cas sur la figure 9, ce fil électriquement conducteur MP peut très avantageusement présenter dans la zone ZN, une forme de type spirale imbriquée dans la forme de type spirale du premier fil électriquement conducteur FL1.

A titre d'exemple non limitatif, la distance entre le circuit intégré IC et la zone ZN peut être comprise entre quelques millimètres et un mètre environ et la longueur du premier fil FL1 peut être comprise entre quelques centimètres et 2 mètres environ.

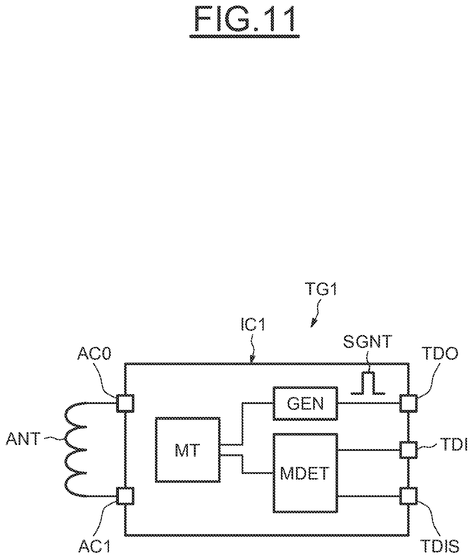

On se réfère maintenant plus particulièrement aux figures 11 à 20 pour décrire une autre variante de l'invention.

Sur la figure 11, la référence TG1 désigne un transpondeur passif sans contact, par exemple une étiquette. Dans cet exemple, le transpondeur passif sans contact est configuré pour communiquer avec un lecteur (non représenté ici) via son antenne ANT en utilisant un signal de porteuse ayant une fréquence par exemple de 13,56MHz.

Le transpondeur passif est ici un transpondeur capable de communiquer selon un protocole de communication sans contact utilisant par exemple la technologie de communication sans proche (NFC).

Ce transpondeur peut être également un transpondeur RFID utilisant cette technologie NFC.

Ce transpondeur TG1 comprend un circuit intégré IC1, par exemple un circuit intégré de la famille ST25 commercialisé par la société STMicroelectronics.

Le circuit intégré IC1 comporte deux bornes dites bornes d'antenne AC0 et AC1 respectivement connectées aux deux bornes de l'antenne ANT.

Le circuit intégré IC1 comporte également des moyens de traitement MT, comportant par exemple, un circuit de récupération d'énergie, un microprocesseur et/ou une logique câblée ainsi qu'une mémoire, et configurés pour
délivrer une tension d'alimentation à l'ensemble du circuit intégré à partir du champ magnétique reçu d'un lecteur, et
traiter les informations reçues du lecteur et rétro-moduler le signal de porteuse en vue de la transmission d'informations vers le lecteur.

Le circuit intégré IC1 comporte également une première borne supplémentaire TDO, une deuxième borne supplémentaire TDI et une troisième borne supplémentaire TDIS.

Ces trois bornes supplémentaires sont distinctes et différentes des bornes d'antenne AC0 et AC1.

Le circuit intégré IC1 comporte également des moyens de génération GEN, de structure classique, connectés à la première borne supplémentaire TDO, ainsi que des moyens de détection MDET, par exemple réalisés sous la forme d'un circuit logique, connectés à la deuxième borne supplémentaire TDI et à la troisième borne supplémentaire TDIS.

Comme on le verra plus en détails ci-après les moyens de génération GEN sont configurés pour, sur commande des moyens de traitement MT, délivrer un signal de test SGNT, par exemple une impulsion, sur la première borne supplémentaire TDO et les moyens de détection MDET sont configurés pour détecter la présence ou l'absence du signal de test sur la deuxième et la troisième borne supplémentaires TDI et TDIS et délivrer le résultat de cette détection aux moyens de traitement MT.

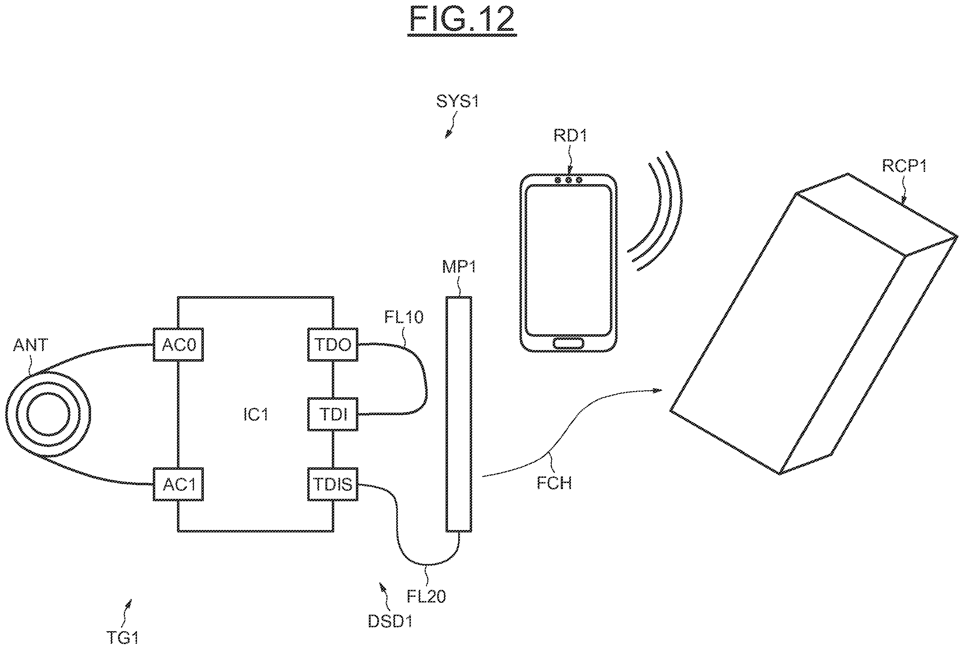

Sur la figure 12, la référence SYS1 désigne un système comportant un dispositif DSD1 de détection, destiné à détecter par exemple une tentative d'ouverture ou d'une ouverture d'un récipient fermé RCP1 destiné par exemple à contenir un produit, par exemple un flacon de parfum.

Le dispositif de détection DSD1 comporte le transpondeur passif sans contact TG1 ainsi qu'un premier fil électriquement conducteur FL10 reliant les deux bornes supplémentaires TDO et TDI du circuit intégré IC1.

Le dispositif de détection comporte également un élément électriquement conducteur MP1 qui, lorsque le récipient RCP1 n'est pas ouvert ou n'a pas été ouvert puis refermé, est électriquement isolé du premier fil électriquement conducteur FL10.

Le dispositif de détection DSD1 comporte également un deuxième fil électriquement conducteur FL20 reliant la troisième borne supplémentaire TDIS du circuit intégré IC1 à l'élément électriquement conducteur MP1.

Comme l'illustre la flèche FCH, le dispositif de détection est destiné à être placé sur le récipient fermé RCP1 d'une façon appropriée comme cela va être décrit plus en détail ci-après.

En outre, un lecteur sans contact RD1, par exemple un téléphone mobile cellulaire émulé en mode lecteur, est capable de communiquer avec le transpondeur TG.

D'une façon générale, le premier fil électriquement conducteur FL10 a une partie sectionnable, qui peut être tout ou partie du premier fil, et le premier fil électriquement conducteur est agencé sur le récipient pour être sectionné au niveau de sa partie sectionnable en cas d'ouverture ou de tentative d'ouverture du récipient.

Par ailleurs, un moyen de court-circuit comportant ici l'élément électriquement conducteur MP1 et le deuxième fil électriquement conducteur FL20 est configuré pour court-circuiter la première borne supplémentaire TDO (et également la deuxième borne supplémentaire TDI) avec la troisième borne supplémentaire TDIS, en cas de sectionnement de la partie sectionnable du premier fil électriquement conducteur et reconstitution d'une connexion électrique entre les deux bornes supplémentaires TDO et TDI.

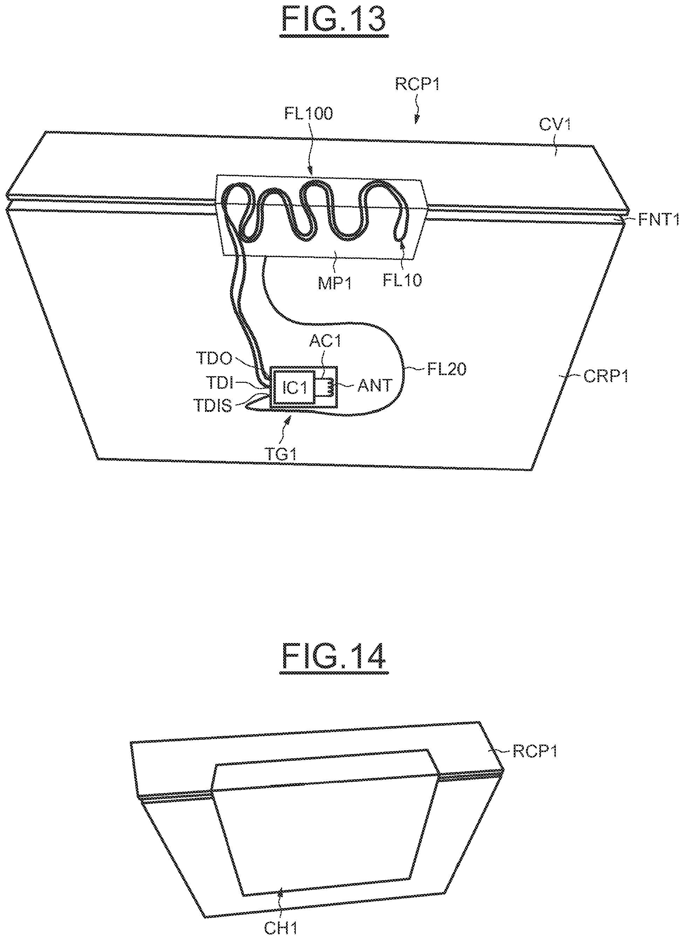

On se réfère maintenant plus particulièrement à la figure 13 pour illustrer un exemple de mise en place du dispositif de détection sur un récipient RCP.

Dans cet exemple, le récipient RCP1 est une boîte comportant un corps CRP1 fermé par un couvercle CV1 ménageant avec le corps CRP1 une fente FNT1.

Dans cet exemple très schématique, l'élément électriquement conducteur est une feuille métallique MP1 fixée d'une part sur le corps CRP1 et d'autre part sur le couvercle CV1 pour recouvrir une partie de la fente FNT1.

Le premier fil électriquement conducteur FL10, entouré de sa gaine isolante, serpente sur la feuille métallique MP1 de façon à s'étendre alternativement sur le couvercle et sur le corps CRP1.

Cette partie en forme de serpentin FL100 forme la partie sectionnable du premier fil électriquement conducteur FL10.

En effet, lors de l'ouverture du couvercle CV1, le fil FL10 sera sectionné au niveau de la partie sectionnable FL100.

Bien entendu, le dessin de la figure 13 n'est pas à l'échelle et l'homme du métier saura choisir le diamètre adéquat pour le fil FL10 de façon à garantir un sectionnement de celui-ci lors de l'ouverture du couvercle CV1.

Le transpondeur TG1 est par exemple fixé sur une paroi du corps CRP1.

Le premier fil FL10 est relié aux bornes supplémentaires TDO et TDI tandis que le deuxième fil électriquement conducteur FL20 relie la feuille métallique MP à la troisième borne supplémentaire TDIS.

Puis, une fois ce montage effectué, l'ensemble est recouvert d'un cache CH1 comme illustré très schématiquement sur la figure 14.

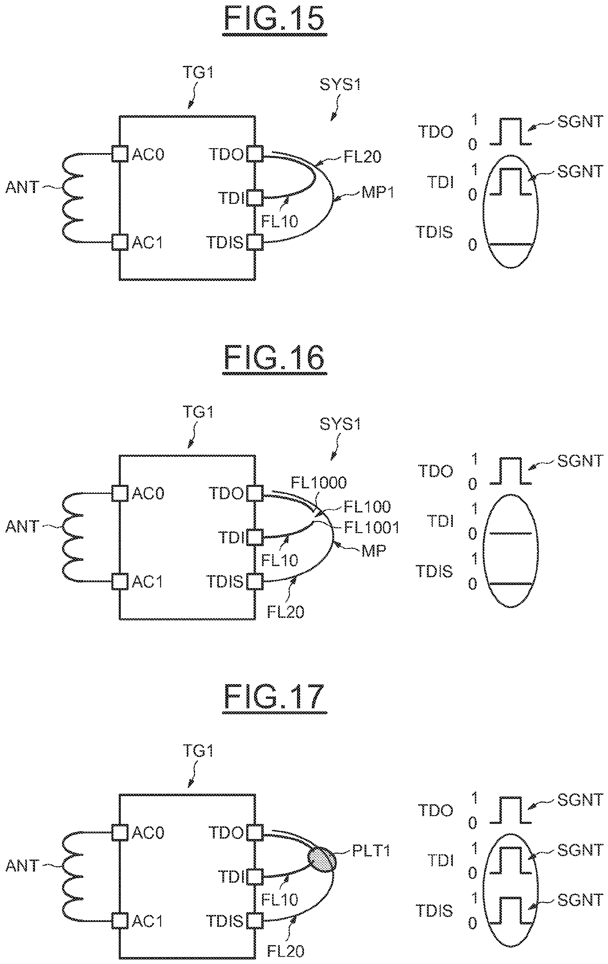

On se réfère maintenant plus particulièrement aux figures 15 à 17 pour illustrer différentes configurations du système SYS1.

Sur les figures 15 à 17, l'élément métallique MP1 est une partie du deuxième fil FL20.

Dans une première configuration illustrée sur la figure 15, le premier fil électriquement conducteur FL1 n'est pas sectionné et est électriquement isolé de l'élément métallique MP1.

Les moyens de traitement du circuit IC1 commandent les moyens de génération de façon à délivrer le signal de test SGNT sur la première borne supplémentaire TDO.

Les moyens de détection détectent alors la présence du signal de test SGNT sur la deuxième borne supplémentaire TDI et l'absence de ce signal sur la troisième borne supplémentaire TDIS.

Cette information est transmise aux moyens de traitement MT.

Cette première configuration est représentative d'un premier fil FL10 non sectionné correspondant ici à un récipient non ouvert et donc à un produit, par exemple le flacon de parfum, valide.

Sur la figure 16, le système SYS1 présente une configuration intermédiaire dans laquelle la partie sectionnable FL100 du premier fil conducteur FL10 a été sectionnée lors d'une tentative d'ouverture ou d'une ouverture du récipient RCP1.

Par contre dans cette configuration intermédiaire, la connexion électrique entre les deux parties sectionnées du premier file FL10, n'a pas été reconstituée.

Cette configuration intermédiaire correspond par exemple au fait que le récipient RCP a fait l'objet d'une ouverture ou d'une tentative d'ouverture, et donc le produit ne peut pas être considéré comme valide.

Une telle configuration intermédiaire est détectée par les moyens de détection par la détection de l'absence du signal de test SGNT (généré sur la première borne supplémentaire TDO) sur la deuxième borne supplémentaire TDI et sur la troisième borne supplémentaire TDIS.

La figure 17 illustre une deuxième configuration du système SYS1 dans laquelle le premier fil électriquement conducteur FL10, après avoir été sectionné lors d'une tentative d'ouverture ou d'une ouverture du récipient RCP1, a été resolidarisé de façon à rétablir la connexion électrique entre les deux bornes supplémentaires TDO et TDI.

Plus particulièrement, les deux parties sectionnées FL1000 et FL1010 de ce fil ont été remises en contact électrique par un moyen de solidarisation qui est ici par exemple un plot de colle conductrice PLT1.

De par cette opération, une partie du plot de colle PLT1 est venue en contact avec l'élément électriquement conducteur MP1 (ici une partie du deuxième fil FL20) ce qui provoque par conséquent un court-circuit via le deuxième fil électriquement conducteur FL20 et l'élément électriquement conducteur MP1, entre la première borne supplémentaire TDO (et d'ailleurs la deuxième borne supplémentaire TDI) et la troisième borne supplémentaire TDIS.

Cette deuxième configuration est par conséquent représentative d'un fil FL10 qui a été sectionné lors d'une tentative d'ouverture ou d'une ouverture du récipient RCP1 et qui a été resolidarisé pour tenter de faire croire que le fil n'avait pas été sectionné.

Une telle deuxième configuration intermédiaire est détectée par les moyens de détection par la détection de la présence du signal de test SGNT (généré sur la première borne supplémentaire TDO) sur la deuxième borne supplémentaire TDI et sur la troisième borne supplémentaire TDIS.

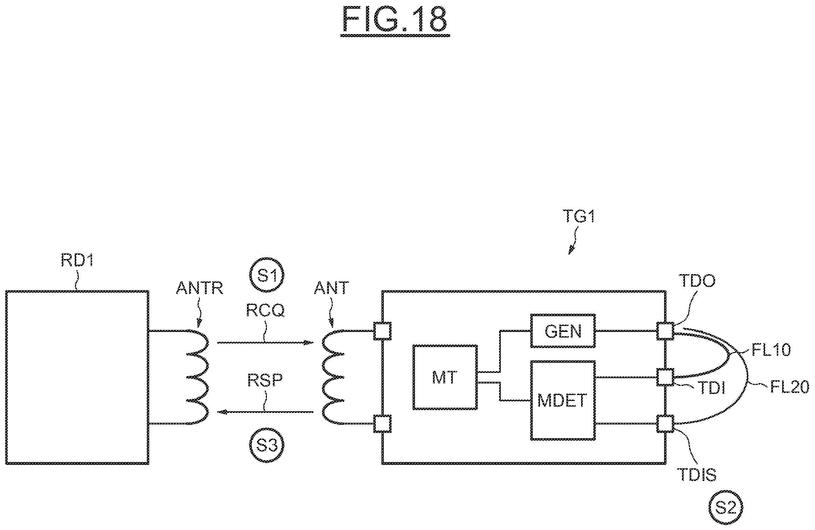

On se réfère maintenant plus particulièrement à la figure 18, qui illustre un mode de mise en œuvre d'un procédé de dialogue entre le lecteur RD1 et le transpondeur TG1, permettant de détecter la configuration du système correspondant à l'une des configurations illustrées sur les figures 15 à 17.

Dans une première étape S1, le lecteur émet une requête RCQ à destination du transpondeur TG1.

Cette requête est traitée par les moyens de traitement MT et ceux-ci commandent les moyens de génération GEN de façon qu'ils délivrent le signal de test sur la première borne supplémentaire TDO et donc sur le premier fil FL10.

Dans l'étape S2, les moyens de détection MDET, détectent la présence ou l'absence du signal de test sur la deuxième borne supplémentaire TDI et sur la troisième borne supplémentaire TDIS.

Cette information de détection est transmise aux moyens de traitement MT qui l'encapsulent de façon classique et connue dans une réponse RSP transmise au lecteur RD1.

Ce dernier désencapsule la réponse et retrouve l'information de détection.

L'utilisateur du lecteur peut alors en déduire la configuration du transpondeur et par conséquent le statut du produit.

Et quelle que soit la configuration détectée, le transpondeurTG1 reste opérationnel.

Cette autre variante à trois bornes supplémentaires n'est pas limitée aux modes de réalisation et de mise en œuvre qui viennent d'être décrits.

Ainsi, d'autres formes d'éléments électriquement conducteurs sont possibles. D'autres agencements du premier fil électriquement conducteur et de l'élément électriquement conducteur peuvent être prévus en fonction de l'application envisagée et/ou de la forme du récipient.

De même, en fonction de l'application envisagée et/ou de la forme du récipient, la partie sectionnable du premier fil électriquement conducteur pourrait se situer au voisinage immédiat de l'élément électriquement conducteur sans nécessairement le chevaucher.

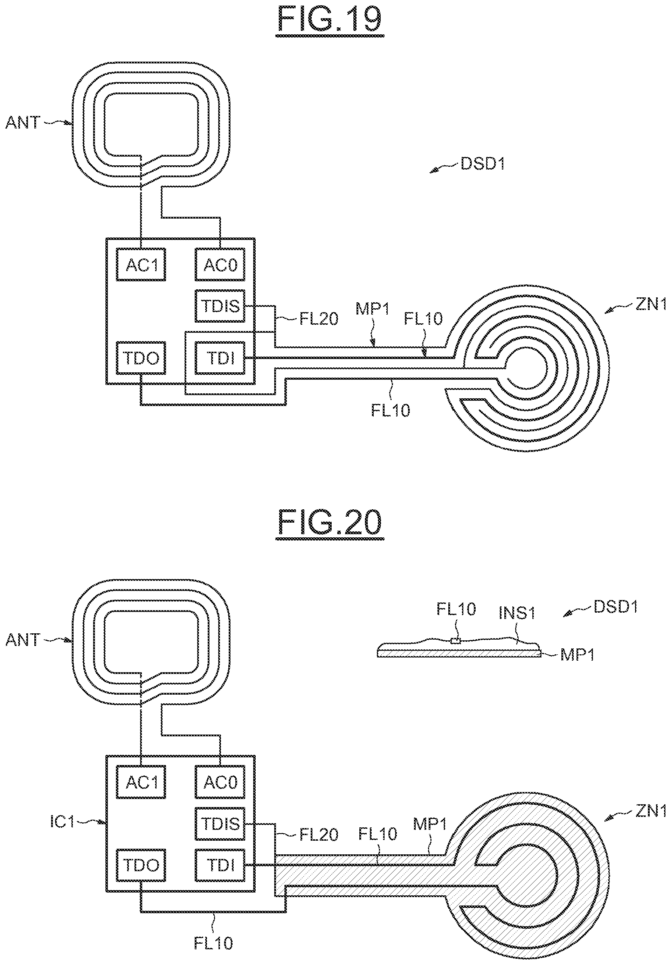

On peut à cet égard se référer plus particulièrement aux figures 19 et 20 qui illustrent schématiquement deux autres modes possibles, mais non limitatifs, de réalisation du dispositif DSD1 de détection.

Sur la figure 19, le premier fil électriquement conducteur FL10 qui relie les deux bornes supplémentaires TDO et TDI, comporte des portions rectilignes prolongées dans une zone ZN1 par des cercles quasi complets et concentriques.

La partie sectionnable de ce fil FL10 peut être considérée comme étant tout ou partie du fil FL10.

L'élément électriquement conducteur MP1 comporte dans cet exemple un fil situé au voisinage du premier fil FL10.

Ce fil MP1 comporte également des portions rectilignes imbriquées avec les portions rectilignes du premier fil FL10, prolongées dans la zone ZN1 par des cercles quasi-complets et concentriques, imbriqués avec les quasi-cercles concentriques du premier fil FL10.

Le deuxième fil FL20 relie le fil MP1 à la troisième borne supplémentaire TDIS.

L'isolation électrique entre le premier fil FL10 et le fil MP1, lorsque le récipient RCP1 n'est pas ouvert ou n'a pas été ouvert puis refermé, est obtenu ici par l'espace entre ces fils.

A titre indicatif, cet espace peut être compris entre 10 micromètres et plusieurs millimètres, par exemple 200 micromètres.

Le diamètre des fils peut être également compris entre 10 micromètres et plusieurs millimètres, par exemple 200 micromètres.

Sur la figure 20, le premier fil électriquement conducteur FL10 qui relie les deux bornes supplémentaires TDO et TDI, présente la même forme que celle illustrée sur la figure 19.

Par contre, l'élément électriquement conducteur MP1 comporte ici un élément surfacique électriquement conducteur, souple ou rigide, par exemple une couche ou une feuille métallique, supportant le premier fil électriquement conducteur FL10 par l'intermédiaire d'une couche isolante INS1, ayant par exemple une épaisseur de 200 micromètres, qui assure l'isolation électrique entre la couche conductrice MP1 et le fil FL10 lorsque le récipient RCP1 n'est pas ouvert ou n'a pas été ouvert puis refermé.

Le deuxième fil électriquement conducteur FL20 relie la couche conductrice MP1 à la troisième borne supplémentaire TDIS.

Bien entendu, alors que sur les figures 19 et 20, la zone ZN1 présente une forme circulaire, toute autre forme régulière, par exemple une forme rectangulaire, ou non régulière serait possible.

Plus généralement, le premier fil électriquement conducteur FL10 peut présenter dans la zone ZN1, une forme de type spirale.

Et dans le cas où l'élément électriquement conducteur MP1 comporte également un fil comme c'est le cas sur la figure 19, ce fil électriquement conducteur MP1 peut très avantageusement présenter dans la zone ZN1, une forme de type spirale imbriquée dans la forme de type spirale du premier fil électriquement conducteur FL10.

A titre d'exemple non limitatif, la distance entre le circuit intégré IC1 et la zone ZN1 peut être comprise entre quelques millimètres et un mètre environ et la longueur du premier fil FL10 peut être comprise entre quelques centimètres et 2 mètres environ.

## Revendications

1. Système, comprenant un récipient fermé (RCP), et un dispositif (DSD) de détection, le dispositif de détection (DSD) comprenant un transpondeur passif sans contact (TG) configuré pour communiquer avec un lecteur (RD) via une antenne (ANT) en utilisant un signal de porteuse, le transpondeur (TG) comportant un circuit intégré (IC) possédant deux bornes d'antenne (AC0, AC1) connectées à l'antenne et une première et une deuxième bornes supplémentaires (TDO, TDI) reliées par un premier fil électriquement conducteur (FL1 ; FL10) ayant une partie sectionnable (FL10 ; FL100) et agencé pour être sectionné au niveau de sa partie sectionnable en cas d'ouverture ou de tentative d'ouverture du récipient, et un moyen de court-circuit (MP, PLT, FL2 ; MP1, PLT1, FL20) configuré pour court-circuiter la première borne supplémentaire (TDO) avec une autre borne (AC1, TDIS) du circuit intégré en cas de sectionnement de la partie sectionnable (FL10 ; FL100) et reconstitution d'une connexion électrique entre les première et deuxième bornes supplémentaires (TDO, TDI).

2. Système selon la revendication 1, possédant une première configuration dans laquelle le premier fil électriquement conducteur (FL1 ; FL10) n'est pas sectionné et est électriquement isolé du moyen de court-circuit, et une deuxième configuration dans laquelle le premier fil électriquement conducteur (FL10) est sectionné au niveau de sa partie sectionnable de façon à former deux parties de fil (FL100, FL101 ; FL1000, FL1010), les extrémités des deux parties de fil (FL100, FL101; FL1000, FL1010) étant électriquement resolidarisées par un moyen de solidarisation (PLT ; PLT1) électriquement conducteur venant également contacter une partie (MP ; MP1)) du moyen de court-circuit.

3. Système selon la revendication 1 ou 2, dans lequel ledit moyen de court-circuit comprend un élément électriquement conducteur (MP ; MP1) disposé au voisinage de la partie sectionnable du premier fil électriquement conducteur et relié à ladite autre borne par un deuxième fil électriquement conducteur (FL2 ; FL20), cet élément électriquement conducteur (MP ; MP1) étant électriquement isolé du premier fil électriquement conducteur (FL1 ; FL10) en absence de sectionnement de ce premier fil électriquement conducteur (FL1 ; FL10).

4. Système selon les revendications 2 et 3, dans lequel le moyen de solidarisation électriquement conducteur (PLT ; PLT1) contacte l'élément électriquement conducteur (MP ; MP1) et le premier fil électriquement conducteur (FL1 ; FL10) dans ladite deuxième configuration.

5. Système selon la revendication 3 ou 4, dans lequel l'élément électriquement conducteur (MP ; MP1) comprend un élément surfacique électriquement conducteur (MP ; MP1).

6. Système selon la revendication 5, dans lequel en absence de sectionnement du premier fil électriquement conducteur (FL1 ; FL10), la partie sectionnable (FL10 ; FL100) du premier fil (FL1 ; FL10) est supportée par l'élément surfacique (MP ; MP1) et est électriquement isolée de cet élément surfacique (MP ; MP1) par une couche isolante (INS ; INS1).

7. Système selon la revendication 3 ou 4, dans lequel l'élément électriquement conducteur (MP ; MP1) comprend un fil électriquement conducteur (MP ; MP1) s'étendant au voisinage et le long de la partie sectionnable du premier fil électriquement conducteur (FL1 ; FL10), le fil électriquement conducteur (MP ; MP1) et le premier fil électriquement conducteur (FL1 ; FL10) étant séparés en absence de sectionnement de ce premier fil électriquement conducteur (FL1 ; FL10).

8. Système selon l'une des revendications 3 à 7, dans lequel le premier fil électriquement conducteur (FL1 ; FL10) présente dans une zone (ZN ; ZN1) une forme du type spirale.

9. Système selon les revendications 7 et 8, dans lequel le fil électriquement conducteur (MP ; MP1) présente dans la zone (ZN ; ZN1), une forme du type spirale imbriquée dans la forme du type spirale de premier fil électriquement conducteur (FL1 ; FL10).

10. Système selon l'une des revendications précédentes, dans lequel ladite autre borne est une première borne d'antenne (AC1).

11. Système selon l'une des revendications 1 à 9, dans lequel le circuit intégré comprend une troisième borne supplémentaire (TDIS), ladite autre borne étant cette troisième borne supplémentaire (TDIS).

12. Système selon la revendication 11, dans lequel le circuit intégré comprend des moyens de génération (GEN) configurés pour délivrer un signal de test (SGNT) sur la première borne supplémentaire (TDO) et des moyens de détection (MDET) configurés pour détecter la présence ou l'absence dudit signal de test sur la deuxième borne supplémentaire (TDI) et sur la troisième borne supplémentaire (TDIS).

13. Système selon les revendications 2 et 12, dans lequel
- dans ladite première configuration, les moyens de détection sont configurés pour détecter la présence du signal de test sur la deuxième borne supplémentaire (TDI) et l'absence du signal de test sur la troisième borne supplémentaire (TDIS), et
- dans ladite deuxième configuration, les moyens de détection sont configurés pour détecter la présence du signal de test sur la deuxième borne supplémentaire (TDI) et sur la troisième borne supplémentaire (TDIS).

14. Système selon la revendication 13, possédant en outre une configuration intermédiaire dans laquelle le premier fil électriquement conducteur (FL10) est sectionné au niveau de sa partie sectionnable de façon à former les deux parties de fil (FL1000, FL1010) non électriquement en contact et électriquement isolées du moyen de court-circuit (MP1), les moyens de détection étant configurés pour, dans cette configuration intermédiaire, détecter une absence du signal de test sur la deuxième borne supplémentaire (TDI) et sur la troisième borne supplémentaire (TDIS).

15. Procédé de détection d'un sectionnement de la partie sectionnable du premier fil électriquement conducteur (FL1) suivi d'une reconstitution d'une connexion électrique entre la première et la deuxième bornes supplémentaires (TDO, TDI) du dispositif (DSD) appartenant au système selon la revendication 10, comprenant, en présence du transpondeur (TG) dans un état non défectueux, une non réponse du transpondeur en présence d'un champ magnétique émis par le lecteur (80).

16. Procédé de détection d'un sectionnement de la partie sectionnable du premier fil électriquement conducteur (FL10) suivi d'une reconstitution d'une connexion électrique entre la première et la deuxième bornes supplémentaires (TDO, TDI) du dispositif (DSD1) appartenant au système selon la revendication 11, comprenant une génération d'un signal de test (SGNT) sur la première borne supplémentaire (TDO) et une détection du signal de test sur la deuxième (TDI) et la troisième (TDIS) bornes supplémentaires.

## Patentansprüche

1. System, umfassend einen geschlossenen Behälter (RCP) und eine Detektionsvorrichtung (DSD), wobei die Detektionsvorrichtung (DSD) einen kontaktlosen passiven Transponder (TG) umfasst, der dazu konfiguriert ist, mit einem Lesegerät (RD) über eine Antenne (ANT) unter Verwendung eines Signalträgers zu kommunizieren, wobei der Transponder (TG) eine integrierte Schaltung (IC) mit zwei mit der Antenne verbundenen Antennenanschlüssen (AC0, AC1) und einen ersten und einen zweiten zusätzlichen Anschluss (TDO, TDI) umfasst, die durch einen ersten elektrisch leitenden Draht (FL1; FL10) verbunden sind, der einen abtrennbaren Teil (FL10; FL100) und so angeordnet ist, dass er im Falle eines Öffnens oder des Versuchs eines Öffnens des Behälters an seinem abtrennbaren Teil abgetrennt werden kann, und ein Kurzschlussmittel (MP, PLT, FL2; MP1, PLT1, FL20) aufweist, das dazu konfiguriert ist, im Falle der Trennung des abtrennbaren Teils (FL10; FL100) und Wiederherstellens einer elektrischen Verbindung zwischen den ersten und zweiten zusätzlichen Anschlüssen (TDO, TDI) den ersten zusätzlichen Anschlusses (TDO) mit einem anderen Anschluss (AC1, TDIS) des integrierten Schaltkreises kurzzuschließen.

2. System nach Anspruch 1, das eine erste Konfiguration, bei der der erste elektrisch leitende Draht (FL1; FL10) nicht abgetrennt und elektrisch von dem Kurzschlussmittel isoliert ist, und eine zweite Konfiguration besitzt, bei der der erste elektrisch leitende Draht (FL10) an seinem abtrennbaren Teil abgetrennt wird, um zwei Drahtteile (FL100, FL101; FL1000, FL1010) zu bilden, wobei die Enden der beiden Drahtteile (FL100, FL101; FL1000, FL1010) durch ein elektrisch leitendes Befestigungsmittel (PLT; PLT1), das ferner mit einem Teil (MP; MP1) des Kurzschlussmittels in Kontakt kommt, elektrisch wieder verbunden werden.

3. System nach Anspruch 1 oder 2, wobei das Kurzschlussmittel ein elektrisch leitendes Element (MP; MP1) umfasst, das in der Nähe des abtrennbaren Teils des ersten elektrisch leitenden Drahts angeordnet und mit dem anderen Anschluss durch einen zweiten elektrisch leitenden Draht (FL2; FL20) verbunden ist, wobei dieses elektrisch leitende Element (MP; MP1) von dem ersten elektrisch leitenden Draht (FL1; FL10) elektrisch isoliert ist, wenn dieser erste elektrisch leitende Draht (FLI; FLI0) nicht abgetrennt ist.

4. System nach den Ansprüchen 2 und 3, wobei das elektrisch leitende Sicherungsmittel (PLT; PLT1) in der zweiten Konfiguration das elektrisch leitende Element (MP; MP1) und den ersten elektrisch leitenden Draht (FL1; FL10) kontaktiert.

5. System nach Anspruch 3 oder 4, wobei das elektrisch leitende Element (MP; MP1) ein elektrisch leitendes Flächenelement (MP; MP1) umfasst.

6. System nach Anspruch 5, wobei der abtrennbare Teil (FL10; FL100) des ersten Drahts (FL1; FL10) von dem Flächenelement (MP; MP1) getragen wird und von dem Flächenelement (MP; MP1) durch eine isolierende Schicht (INS; INS1) elektrisch isoliert ist, wenn der erste elektrisch leitende Draht (FL1; FL10) nicht abgetrennt ist.

7. System nach Anspruch 3 oder 4, wobei das elektrisch leitende Element (MP; MP1) einen elektrisch leitenden Draht (MP; MP1) umfasst, der sich in der Nähe und entlang des abtrennbaren Teils des ersten elektrisch leitenden Drahts (FL1; FL10) erstreckt, wobei der elektrisch leitende Draht (MP; MP1) und der erste elektrisch leitende Draht (FL1; FL10) getrennt sind, wenn der erste elektrisch leitende Draht (FL1; FL10) nicht abgetrennt ist.

8. System nach einem der Ansprüche 3 bis 7, wobei der erste elektrisch leitende Draht (FL1; FL10) in einer Zone (ZN; ZN1) eine spiralartige Form aufweist.

9. System nach den Ansprüchen 7 und 8, wobei der elektrisch leitende Draht (MP; MP1) in der Zone (ZN; ZN1) eine spiralartige Form aufweist, die in die spiralartige Form des ersten elektrisch leitenden Drahts (FL1; FL10) eingebettet ist.

10. System nach einem der vorhergehenden Ansprüche, wobei der andere Anschluss ein erster Antennenanschluss (AC1) ist.

11. System nach einem der Ansprüche 1 bis 9, wobei die integrierte Schaltung einen dritten zusätzlichen Anschluss (TDIS) umfasst, wobei der andere Anschluss dieser dritte zusätzliche Anschluss (TDIS) ist.

12. System nach Anspruch 11, wobei die integrierte Schaltung ein Generierungsmittel (GEN), das dazu konfiguriert ist, ein Testsignal (SGNT) an den ersten zusätzlichen Anschluss (TDO) zu liefern, und ein Detektionsmittel (MDET) umfasst, das dazu konfiguriert ist, das Vorhandensein oder das Fehlen des Testsignals am zweiten zusätzlichen Anschluss (TDI) und am dritten zusätzlichen Anschluss (TDIS) zu detektieren.

13. System nach den Ansprüchen 2 und 12, wobei
- in der ersten Konfiguration das Detektionsmittel dazu konfiguriert ist, das Vorhandensein des Testsignals am zweiten zusätzlichen Anschluss (TDI) und das Fehlen des Testsignals am dritten zusätzlichen Anschluss (TDIS) zu detektieren, und
- in der zweiten Konfiguration das Detektionsmittel dazu konfiguriert ist, das Vorhandensein des Testsignals am zweiten zusätzlichen Anschluss (TDI) und am dritten zusätzlichen Anschluss (TDIS) zu detektieren.

14. System nach Anspruch 13, das ferner eine Zwischenkonfiguration besitzt, bei der der erste elektrisch leitende Draht (FL10) an seinem abtrennbaren Teil getrennt ist, um die beiden Drahtteile (FL1000, FL1010), die nicht in elektrischem Kontakt und elektrisch von dem Kurzschlussmittel (MP1) getrennt sind, zu bilden, wobei das Detektionsmittel dazu konfiguriert sind, in dieser Zwischenkonfiguration ein Fehlen des Testsignals an dem zweiten zusätzlichen Anschluss (TDI) und an dem dritten zusätzlichen Anschluss (TDIS) zu detektieren.

15. Verfahren zum Detektieren einer Durchtrennung des abtrennbaren Teils des ersten elektrisch leitenden Drahts (FL1) mit anschließender Wiederherstellung einer elektrischen Verbindung zwischen dem ersten und dem zweiten zusätzlichen Anschluss (TDO, TDI) der zu dem System nach Anspruch 10 gehörenden Vorrichtung (DSD), das bei Vorhandensein des Transponders (TG) in einem nicht defekten Zustand ein Nichtansprechen des Transponders bei Vorhandensein eines von dem Lesegerät (80) emittierten Magnetfelds umfasst.

16. Verfahren zum Detektieren einer Trennung des abtrennbaren Teils des ersten elektrisch leitenden Drahts (FL10) mit anschließender Wiederherstellung einer elektrischen Verbindung zwischen dem ersten und dem zweiten zusätzlichen Anschluss (TDO, TDI) der zu dem System nach Anspruch 11 gehörenden Vorrichtung (DSD1), das die Generierung eines Testsignals (SGNT) am ersten zusätzlichen Anschluss (TDO) und eine Detektion des Testsignals am zweiten (TDI) und am dritten (TDIS) zusätzlichen Anschluss umfasst.

## Claims

1. A system, comprising a closed container (RCP), and a detection device (DSD), the detection device (DSD) comprising a contactless passive transponder (TG) configured to communicate with a reader (RD) via an antenna (ANT) using a carrier signal, the transponder (TG) including an integrated circuit (IC) having two antenna terminals (AC0, AC1) connected to the antenna and a first and a second additional terminals (TDO, TDI) interconnected by a first electrically conductive wire (FL1; FL10) having a severable part (FL10; FL100) and arranged to be severed at its severable part in case of opening or attempted opening of the container, an a short-circuiting means (MP, PLT, FL2; MP1, PLT1, FL20) configured to short-circuit the first additional terminal (TDO) with another terminal (AC1, TDIS) of the integrated circuit in case of severance of the severable part (FL10; FL100) and reestablishment of an electrical connection between the first and second additional terminals (TDO, TDI).

2. The system according to claim 1, having a first configuration in which the first electrically conductive wire (FL1; FL10) is not severed and is electrically insulated from the short-circuiting means, and a second configuration in which the first electrically conductive wire (FL10) is severed at its severable part so as to form two wired parts (FL100, FL101; FL1000, FL1010), the ends of the two wired parts (FL100, FL101; FL1000, FL1010) being electrically resecured by an electrically conductive securing means (PLT; PLT1) also contacting a part (MP; MP1) of the short-circuiting means.

3. The system according to claim 1 or 2, wherein said short-circuiting means comprises an electrically conductive element (MP; MP1) disposed in the vicinity of the severable part of the first electrically conductive wire and interconnected to said other terminal by a second electrically conductive wire (FL2; FL20), this electrically conductive element (MP; MP1) being electrically insulated from the first electrically conductive wire (FL1; FL10) in the absence of severance of this first electrically conductive wire (FL1; FL10).

4. The system according to claims 2 and 3, wherein the electrically conductive securing means (PLT; PLT1) contacts the electrically conductive element (MP; MP1) and the first electrically conductive wire (FL1; FL10) in said second configuration.

5. The system according to claim 3 or 4, wherein the electrically conductive element (MP; MP1) comprises an electrically conductive surface element (MP; MP1).

6. The system according to claim 5, wherein in the absence of severance of this first electrically conductive wire (FL1; FL10), the severable part (FL10; FL100) of the first wire (FL1; FL10) is supported by the surface element (MP; MP1) and is electrically insulated from this surface element (MP; MP1) by an insulating layer (INS; INS1).

7. The system according to claim 3 or 4, wherein the electrically conductive element (MP; MP1) comprises an electrically conductive wire (MP; MP1) extending in the vicinity of and along the severable part of the first electrically conductive wire (FL1; FL10), the electrically conductive wire (MP; MP1) and the first electrically conductive wire (FL1; FL10) being separated in the absence of severance of this first electrically conductive wire (FL1; FL10).

8. The system according to one of claims 3 to 7, wherein the first electrically conductive wire (FL1; FL10) has in a zone (ZN; ZN1) a spiral-type shape.

9. The system according to claims 7 and 8, wherein the electrically conductive wire (MP; MP1) has in the zone (ZN; ZN1), a spiral-type shape intertwined in the spiral-type shape of the first electrically conductive wire (FL1; FL10) .

10. The system according to one of the previous claims, wherein said other terminal is a first antenna terminal (AC1).

11. The system according to one of claims 1 to 9, wherein the integrated circuit comprises a third additional terminal (TDIS), said other terminal being this third additional terminal (TDIS).

12. The system according to claim 11, wherein the integrated circuit comprises generation means (GEN) configured to provide a test signal (SGNT) on the first additional terminal (TDO) and detection means (MDET) configured to detect the presence or absence of said test signal on the second additional terminal (TDI) and on the third additional terminal (TDIS).

13. The system according to claims 2 and 12, wherein
- in said first configuration, the detection means are configured to detect the presence of the test signal on the second additional terminal (TDI) and the absence of the test signal on the third additional terminal (TDIS), and
- in said second configuration, the detection means are configured to detect the presence of the test signal on the second additional terminal (TDI) and on the third additional terminal (TDIS).

14. The system according to claim 13, further having an intermediate configuration in which the first electrically conductive wire (FL10) is severed at its severable part so as to form the two wired parts (FL1000, FL1010) non electrically in contact and electrically insulated from the short-circuiting means (MP1), the detection means being configured to, in this intermediate configuration, detect an absence of the test signal on the second additional terminal (TDI) and on the third additional terminal (TDIS).

15. A method for detecting a severance of the severable part of the first electrically conductive wire (FL1) followed by a reestablishment of an electrical connection between the first and second additional terminals (TDO, TDI) of the device (DSD) belonging to the system according to claim 10, comprising, in the absence of the transponder (TG) in a non-faulty state, the transponder non responding in the presence of a magnetic field emitted by the reader (80).

16. A method for detecting a severance of the severable part of the first electrically conductive wire (FL10) followed by a reestablishment of an electrical connection between the first and second additional terminals (TDO, TDI) of the device (DSD1) belonging to the system according to claim 11, comprising generating a test signal (SGNT) on the first additional terminal (TDO) and detecting the test signal on the second (TDI) and third (TDIS) additional terminals.
